# EUROPEAN PATENT APPLICATION

(11) **EP 4 528 666 A1**
(43) Date of publication of application: **26.03.2025**
(21) Application number: 23885012.7
(22) Date of filing: 01.11.2023
(51) Int. Cl.: G06V 10/764, G06T 5/00

(54) **IMAGE PROCESSING METHOD AND APPARATUS, DEVICE, MEDIUM AND PRODUCT**

(30) Priority: 02.11.2022 CN 202211367028
(71) Applicant: DOUYIN VISION CO., LTD., Beijing 100041 (CN)
(72) Inventor: ZHAN, Hanbing, Beijing 100028 (CN); ZHAO, Hongda, Beijing 100028 (CN); LIU, Ying, Beijing 100028 (CN)
(74) Representative: Williams, Michael David
(86) International application number: PCT/CN2023/129171
(87) International publication number: WO 2024/094086

(57) **Abstract**

The embodiment of the present disclosure provides a method, apparatus, device, medium and product for image processing. The method comprises in response to an image processing request, obtaining an image to be processed; parsing the image to be processed from at least one parsing dimension, to obtain at least one parsing result of the image to be processed; selecting, based on the at least one parsing result, a target processing algorithm for the image to be processed; and performing, based on the target processing algorithm, corresponding image improvement processing on the image to be processed, to obtain an improved target image.

## Description

This application claims priority to Chinese Patent Application No. CN202211367028.X, entitled "METHOD, APPARATUS, DEVICE, MEDIUM AND PRODUCT FOR IMAGE PROCESSING", filed on Nov. 02, 2022, the entirety of which is incorporated herein by reference.

### FIELD

Embodiments of the present disclosure relate to the field of computer technologies, and in particular, to a method, apparatus, device, medium and product for image processing.

### BACKGROUND

At present, in the field of computer vision, an automatic processing link of images may be set to process images. For example, the user may upload an image, the image uploaded by the user is processed through the image processing link to obtain a final image processing result, and the image processing result is shown for a user. For example, the user may upload a landscape image and obtain a final recognition result from the landscape image through an image processing link such as face region recognition, image cropping from the face region, and identity recognition from the face region image.

As can be seen from the above description, various image processing algorithms may be included in the processing link of the image to achieve the final processing of the image. However, if all images use the image processing link, the image processing accuracy is not high.

### SUMMARY

The embodiments of the present disclosure provide a method, apparatus, device, medium and product for image processing, to solve the problem that if all images use the image processing link, the image processing accuracy is not high.

**In** a first aspect, an embodiment of the present disclosure provides a method for image processing, including: in response to an image processing request, obtaining an image to be processed; parsing the image to be processed from at least one parsing dimension, to obtain at least one parsing result of the image to be processed; selecting, based on the at least one parsing result, a target processing algorithm for the image to be processed; and performing, based on the target processing algorithm, corresponding image improvement processing on the image to be processed, to obtain an improved target image.

**In** a second aspect, an embodiment of the present disclosure provides an apparatus for image processing, including: an image obtaining unit configured to obtain an image to be processed to be processed in response to an image processing request; an image parsing unit configured to parse the image to be processed from at least one parsing dimension, to obtain at least one parsing result of the image to be processed; an algorithm selection unit configured to select, based on the at least one parsing result, a target processing algorithm for the image to be processed; and an image processing unit configured to perform, based on the target processing algorithm, corresponding image processing on the image to be processed, to obtain an image processing result.

**In** a third aspect, the embodiments of the present disclosure provide an electronic device, including a processor and a memory. The memory stores computer executable instructions. The processor executes the computer executable instructions stored in the memory, to enable the processor to perform the method of image processing according to the first aspect and various possible designs of the first aspect.

In a fourth aspect, the embodiments of the present disclosure provide a computer readable storage medium having stored computer executable instructions that, when executed by a processor, implement the method of image processing according to the first aspect and various possible designs of the first aspect.

In a fifth aspect, the embodiments of the present disclosure provide a computer program product, including a computer program which, when executed by a processor, implements the method of image processing according to the first aspect and various possible designs of the first aspect.

### BRIEF DESCRIPTION OF DRAWINGS

In order to more clearly illustrate the embodiments of the present disclosure or the technical solutions in the prior art, the accompanying drawings used in the description of the embodiments or the prior art will be briefly introduced below, and it will be apparent that the drawings in the following description are some embodiments of the present disclosure, and those skilled in the art may also acquire other drawings according to these drawings without creative labor.
FIG. 1 is an application example diagram of a method for image processing according to an embodiment of the present disclosure;
FIG. 2 is a schematic flowchart of a method for image processing according to an embodiment of the present disclosure;
FIG. 3 is still another flowchart of a method for image processing according to an embodiment of the present disclosure;
FIG. 4 is still another embodiment of a method for image processing according to an embodiment of the present disclosure;
FIG. 5 is another schematic flowchart of a method for image processing according to an embodiment of the present disclosure;
FIG. 6 is an example diagram of an algorithm decision tree according to an embodiment of the present disclosure;
FIG. 7 is a schematic structural diagram of an apparatus for image processing according to an embodiment of the present disclosure; and
FIG. 8 is a schematic diagram of a hardware structure of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. Apparently, the embodiments described are a part of the embodiments of the present disclosure, not the entire embodiments. All other embodiments acquired by those skilled in the art based on the embodiments of the present disclosure without creative efforts shall fall within the scope of the present disclosure.

The technical solutions of the present disclosure can be applied to scenarios of image real-time application processing, the image to be processed obtained in real time is parsed from respective parsing dimensions, a result obtained by parsing is used for selection of processing algorithms of the image, the automatic selection of processing algorithms for the image is implemented, and the accuracy and precision of image algorithm selection are improved.

At present, the application mode of the image is diversified, such as vehicle tracking, image beautifying, face recognition and other application fields. Any image processing may involve a plurality of image processing algorithms, for example, a processing link formed by a series of algorithms such as image denoising, region recognition, image enhancement and the like. The process of image processing may generally include: the user may upload an image, the image uploaded by the user is processed through the image processing link to obtain a final image processing result, and the image processing result is shown for a user. For example, the user may upload a landscape image and obtain a final recognition result from the landscape image through an image processing link such as face region recognition, image cropping from the face region, and identity recognition from the face region image. A plurality of image processing algorithms may be included in the processing link of the image, and usually the algorithms for each processing link are fixed. During the training process, images that match the design background are also used for training and cannot be applied to other links. Therefore, if any image is input into an image processing link, if the background of the image is different from the background of the image processing link, it may result in low accuracy in the image processing recognition and the image processing.

In order to solve the above technical problem, in the technical solution of the present disclosure, analysis results of the image at different dimensions, such as clarity, background, brightness and the like are obtained in a manner of image analysis. Algorithms are adaptively selected for the image through the analysis results of respective dimensions instead of adopting a fixed image processing link to process the image captured, so that the application range of the image is wider, and the processing efficiency is higher.

In the embodiments of the present disclosure, for the acquired image to be processed, the image to be processed may be parsed from at least one analysis dimension to obtain at least one paring result. The target processing algorithm may be selected for the image to be processed by using at least one analysis result. The selection of the target processing algorithm depends on the parsing result of the image to be processed, the adaptive algorithm selection of the image to be processed is realized, and the processing efficiency and accuracy of the image can be improved through algorithm selection. After the target processing algorithm is obtained, the target processing algorithm may be used to perform corresponding image improvement processing on the image to be processed to obtain an improved target image. The image processing mode depends on the selection of the target processing algorithm implemented according to the image itself, the adaptation degree of the selected target processing algorithm and the image to be processed is improved. When the image to be processed is processed with the target processing algorithm, the personalized processing of the image to be processed is realized, and the processing efficiency and accuracy of the image to be processed can be improved.

The technical solutions of the present disclosure and the technical solutions of the present disclosure will be described in detail below with reference to specific embodiments. The following specific embodiments may be combined with each other, and the same or similar concepts or processes may be omitted in some embodiments. The embodiments of the present disclosure will be described in detail below with reference to the accompanying drawings.

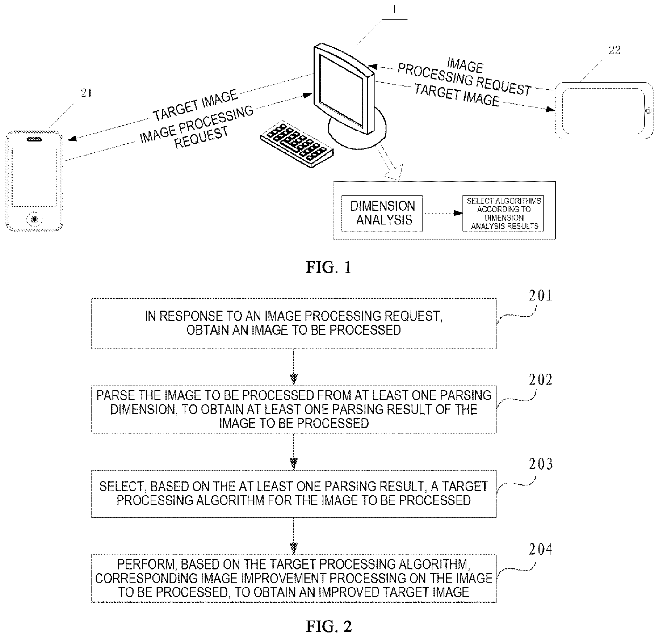

FIG. 1 is an application network architecture diagram of a method for image processing according to the present disclosure. The application network architecture according to the embodiments of the present disclosure may include an electronic device and a client connected to the electronic device through a local area network or a wide area network, and it is assumed that the electronic device may be a server of a type such as a personal computer, a common server, a super personal computer, a cloud server, etc. , and a specific type of the electronic device is not limited in the present disclosure. For example, the client may be a terminal device such as a mobile phone, a tablet computer, a personal computer, a smart home appliance, a wearable device, and the like, and the specific type of the client in the present disclosure is not limited.

As shown in FIG. 1, the electronic device is a cloud server 1, a client(s) 2 may be one or more devices such as a mobile phone 21 and a tablet computer 22, and any client 2 may initiate an image processing request to the cloud server 1 and provide an image to be processed to the server 1. The cloud server 1 may obtain an image to be processed in response to an image processing request, select a processing algorithm for the image to be processed based on the dimension analysis result(s) of the image to be processed, to obtain a target processing algorithm. The target processing algorithm may be used to improve the image to be processed to obtain an improved target image. By the algorithm selection through the analysis result(s) of the target image, that is, the adaptive selection of the image can be realized, and the selection efficiency and accuracy of the image are improved.

Referring to FIG. 2, it is a flowchart of an embodiment of a method for image processing according to an embodiment of the present disclosure. The method for image processing may include the following steps.

At 201: in response to an image processing request, obtain an image to be processed.

Optionally, the image processing request may be initiated by a user. In practical applications, in order to improve image processing efficiency, an image processing page may be provided, and the image processing page may include an image uploading control or a video uploading control. The electronic device may detect that the user triggers the image uploading control or the video uploading control to determine that the user initiates the image processing request, and obtain an image or a video uploaded by the user to obtain the image to be processed from the image or the video uploaded by the user.

For example, the image to be processed may include: a single character image, an image of a plurality of character s, a different type of commodity image, an image captured in a natural scenario, and the like. Since the category to which the image to be processed belongs is more, processing purposes and angles for different categories of image are different. In the related art, the image is directly input into the set image processing model, which may cause the image processing precision to be low. Therefore, in this embodiment, an adaptive manner is used to perform image analysis on the image to be processed, to obtain a corresponding image processing algorithm for the image with the image analysis result.

The image type of the image to be processed is unknown. The image to be processed may belong to any one of a plurality of image types. The image type may refer to any of a numeral type set according to a number of characters in the image, an image type corresponding to an object included in the image, a classification of an image background (for example, a vehicle background, a building background, a natural scenery background, a pure color background, and the like), and the like. In this embodiment, the type of the image is not limited. The processing algorithms of different image processing types may be different.

At 202: parse the image to be processed from at least one parsing dimension, to obtain at least one parsing result of the image to be processed.

In order to solve the problem of algorithm acquisition of the image to be processed with different image types, the image to be processed may be parsed at different parsing dimensions.

The parsing dimension may refer to an angle at which image analysis is performed on the image to be processed, that is, the content of the image analysis and the requirement for the analysis result may be defined through the parsing dimension.

The parsing result may be a result obtained by parsing the image to be processed at a certain parsing dimension. For example, if the parsing dimension is a brightness dimension, the parsing result may be an image brightness value obtained by parsing.

The parsing dimension may include one or more parsing dimensions and may be set based on actual usage requirements. For example, for a simple image processing scenario, such as a scenario for face recognition, a number of portraits and a brightness may be used as a parsing dimension. For a scenario for image beautifying, angles such as brightness, resolution, and noise may be determined as parsing dimensions.

At 203: select, based on the at least one parsing result, a target processing algorithm for the image to be processed.

Optionally, the image to be processed may be parsed respectively from the at least one parsing dimension to obtain a parsing result of each parsing dimension. The at least one parsing result may include a parsing result(s) corresponding to the at least one parsing dimension. In order to effectively utilize the parsing result, the at least one parsing result may also be an effective parsing result(s) in the parsing result(s) corresponding to the at least one parsing dimension. The effective parsing result(s) may be an effective parsing result(s) obtained by performing validity determination on the parsing results of respective parsing dimensions.

The target processing algorithm may be an image processing algorithm for performing image processing on the image to be processed. The image processing algorithm may include at least one image processing algorithm.

The target processing algorithm may be obtained by performing a result analysis and an algorithm selection with at least one parsing result. Through the at least one parsing result, the target processing algorithm required by the image to be processed can be accurately obtained, and the efficient utilization of the parsing result(s) of the image to be processed is realized.

At 204: perform, based on the target processing algorithm, corresponding image improvement processing on the image to be processed, to obtain an improved target image.

The target processing algorithm may include at least one processing algorithm, and the target processing algorithm may be used to perform corresponding image improvement processing on the image to be processed as a whole to obtain the improved target image.

The target image may be output data obtained by processing the input data with a last processing algorithm in the target processing algorithms. The target image may be input as input data to a first processing algorithm in the target processing algorithms. Each processing algorithm is performed sequentially, and the output data of the previous processing algorithm may be used as input data of the next processing algorithm.

**In** the embodiments of the present disclosure, the image to be processed is parsed from the at least one parsing dimension to obtain at least one parsing result. The target processing algorithm may be selected for the image to be processed through at least one parsing result. The selection of the target processing algorithm(s) depends on the parsing result(s) of the image to be processed, the adaptive algorithm selection of the image to be processed is realized, and the processing efficiency and accuracy of the image can be improved through algorithm selection. After the target processing algorithm is obtained, the target processing algorithm may be used to perform corresponding image improvement processing on the image to be processed to obtain the improved target image.

In practical applications, a parsing model of the image may be set, and the image to be processed is parsed from different dimensions through various parsing models to obtain the parsing result of each dimension. In an embodiment, parsing the image to be processed from the at least one parsing dimension, to obtain the at least one parsing result of the image to be processed may include: obtaining image parsing models matching respective parsing dimensions; and inputting the image to be processed respectively into the image parsing models of respective parsing dimensions for parsing, acquiring parsing results of the image to be processed at respective parsing dimensions of the at least one parsing dimension, to obtain the at least one parsing result of the image to be processed.

Optionally, the image parsing model may include at least one of an image quality parsing models, an image meta information parsing model, an object recognition model, a scenario determination model, a copyright recognition model, and the like.

The image quality parsing model may be used to detect a parameter related to the quality of the image. The image quality parsing model may include at least one of: a Video Quality Score (VQScore) model, a noise detection model, a brightness detection model, a color detection model, a contrast detection model, or an aesthetic detection model.

The image meta information may refer to attribute information involved in the image generation process. The image meta information parsing model may be used to parse some meta information of the image. The image meta information parsing model may include at least one of: a resolution detection model, a format acquisition model, an encoding quality parsing model, a transparency detection model, or a subject color analysis model.

The object recognition model may be a model for recognizing a type of object in the image. The object recognition model may include at least one of: a portrait recognition model, a vehicle recognition model, a product recognition model, or a license plate recognition model.

The scenario determination model may be a model for detecting an acquisition scenario of the image. The scenario determination model may include a landscape detection model, a synthetic image detection model, and a cartoon detection model.

The copyright recognition model may be used to detect copyright information of the image and use the copyright information for subsequent algorithm selection. For example, if a watermark is detected, a watermark removal model may be used as an image processing algorithm. The copyright recognition model may include at least one of: a text recognition model, an identification detection model, a PS trace recognition model, or a watermark detection model.

**In** the embodiments of the present disclosure, the matched image parsing model is set for each parsing dimension, the image to be processed can be input into the image parsing model of each parsing dimension for parsing, and the image to be processed is parsed in the analysis of the at least one parsing dimension. By setting the image parsing model for each parsing dimension, the image to be processed can be parsed from each parsing dimension, and the parsing efficiency and accuracy of the image to be processed are improved.

**In** the technical solution provided by the embodiment, for the acquired image to be processed, the image to be processed may be parsed from at least one analysis dimension to obtain at least one paring result. The target processing algorithm may be selected for the image to be processed by using at least one analysis result. The selection of the target processing algorithm depends on the parsing result of the image to be processed, the adaptive algorithm selection of the image to be processed is realized, and the processing efficiency and accuracy of the image can be improved through algorithm selection. After the target processing algorithm is obtained, the target processing algorithm may be used to perform corresponding image improvement processing on the image to be processed to obtain an improved target image. The image processing mode depends on the selection of the target processing algorithm implemented according to the image itself, the adaptation degree of the selected target processing algorithm and the image to be processed is improved. When the image to be processed is processed with the target processing algorithm, the personalized processing of the image to be processed is realized, and the processing efficiency and accuracy of the image to be processed can be improved.

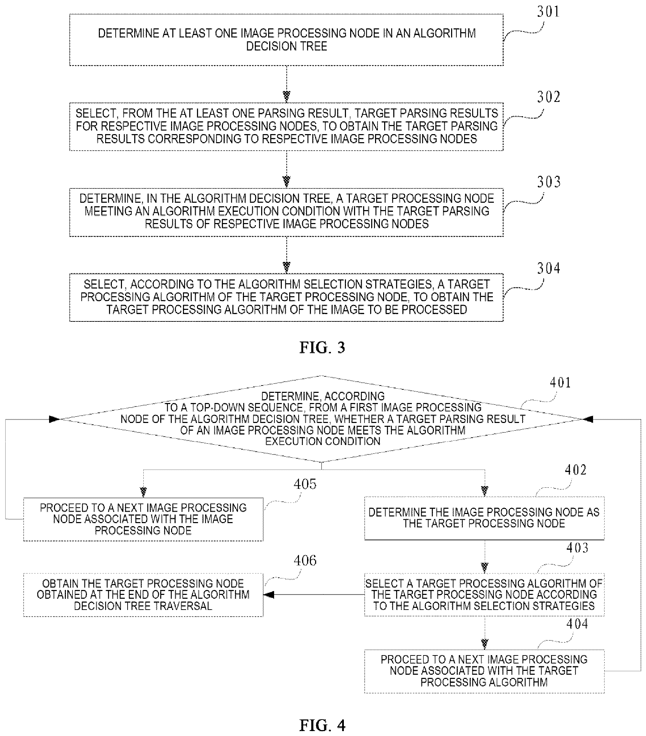

As shown in FIG. 3, it is a flowchart of another embodiment of a method for image processing provided in an embodiment of the present disclosure. The difference from the foregoing embodiments is that: selecting, based on the at least one parsing result, the target processing algorithm for the image to be processed may include the following steps.

At 301: determine at least one image processing node in an algorithm decision tree. The algorithm decision tree is connected by the at least one image processing node according to algorithm selection strategies of respective nodes.

Optionally, the algorithm decision tree provided in this embodiment may include a data structure for making a decision with a "tree" structure. The image processing node may be a node in the algorithm decision tree, and the algorithm decision tree may be used for determining an image algorithm to determine an algorithm associated with each image processing node.

The algorithm decision tree may include at least one image processing node, and the at least one image processing node may be connected according to an algorithm selection strategy of each node to form the algorithm decision tree. Each image processing node may be associated with an algorithm selection strategy. The algorithm selection strategy of each image processing node may be used for algorithm selection of the corresponding image processing node.

The algorithm selection strategies may include algorithm selection strategies set for respective image processing nodes, and an image processing algorithm of the corresponding image processing node may be obtained by performing an algorithm selection strategy.

At 302: select, from the at least one parsing result, target parsing results for respective image processing nodes, to obtain the target parsing results corresponding to respective image processing nodes.

The target parsing results may include a plurality of target parsing results, each target parsing result may correspond to a corresponding parsed content information, and the parsed content information may include a text described by the parsed content. The parsing result may include, for example, a brightness value detected by the brightness detection model. The image processing node may include an image enhancement node, and the image enhancement node may include a brightness enhancement node.

The target parsing results corresponding to respective image processing nodes may include a target parsing result selected according to a processing function or a processing requirement of the image processing node.

At 303: determine, in the algorithm decision tree, a target processing node meeting an algorithm execution condition with the target parsing results of respective image processing nodes.

The algorithm decision tree may include at least one image processing node, and a target processing node meeting an algorithm execution condition in the decision algorithm tree may be determined. The algorithm execution condition may refer to a determination condition that the image processing node performs the association algorithm. If it is determined that the image processing node meets the algorithm execution condition, it is determined that the image processing node is the target processing node. If it is determined that the image processing node does not meet the algorithm execution condition, it is determined that the image processing node is the target processing node.

The algorithm execution conditions of different image processing nodes may be different and may be determined based on the processing function of the image processing node. Taking the brightness enhancement node as an example, the algorithm execution condition may be set to be that the brightness value is less than 30. Taking the color correction node as an example, the algorithm execution condition may be set to be that the color value is less than 55. Therefore, for any image processing node, a corresponding algorithm execution condition may be determined based on the processing function or requirement of the image processing node.

At 304: select, according to the algorithm selection strategies, a target processing algorithm of the target processing node, to obtain the target processing algorithm of the image to be processed.

The algorithm selection strategy may include an algorithm execution condition, and the algorithm execution condition may be used as a part of the algorithm selection strategy. The algorithm selection strategy may include a specific selection strategy of the algorithm. The algorithm selection strategy may include two steps. The first step may determine, based on an algorithm execution condition, whether the image processing node meets the algorithm execution condition, and the second step is that, in response to a determination that the image processing node is the target processing node that meets the algorithm execution condition, the algorithm associated with the node may be selected to obtain the target processing algorithm of the node.

In this embodiment, if the algorithm selection is performed for the algorithm decision tree, the algorithm selection may be performed based on at least one image processing node and an algorithm selection strategy respectively managed by each image processing node, and by setting an image processing algorithm for each image processing node, a targeted algorithm selection may be performed on each image processing node, so that the algorithm selection of each image processing node is more targeted, and the accuracy is higher.

For ease of understanding, as shown in FIG. 4, it is a flowchart of another embodiment of a method for image processing according to an embodiment. The difference from the foregoing embodiments is that: determining, in the algorithm decision tree, the target processing node meeting the algorithm execution condition with the target parsing results of respective image processing nodes may include the following steps.

At 401: determine, according to a top-down sequence, from a first image processing node of the algorithm decision tree, whether a target parsing result of an image processing node meets the algorithm execution condition. If yes, perform 402, otherwise perform 405.

For example, in an embodiment, if it is determined that the target parsing result of the image processing node meets the algorithm execution condition, it is determined that the image processing node is the target processing node. After the target processing algorithm of the target processing node is selected according to the algorithm selection strategy, the target processing node associated with the target processing algorithm is proceeded to, to continue to determine whether a target parsing result of the image processing node meets the algorithm execution condition. In another embodiment, if it is determined that the target parsing result of the image processing node fails to meet the algorithm execution condition, a next image processing node associated with the image processing node is proceeded to, to continue to determine whether a target parsing result of the image processing node meets the algorithm execution condition.

Optionally, the algorithm execution condition may perform steps of condition determining through the algorithm selection strategy. The algorithm selection strategies include at least one numerical interval, and the at least one numerical interval includes a first numerical interval and a second numerical interval. If the target parsing result of the image processing node meets the algorithm execution condition, it may be included that the target parsing result of the image processing node does not belong to the first value interval in the at least one numerical interval, or the target parsing result of the image processing node belongs to the second numerical interval in the at least one numerical interval.

At 402: determine the image processing node as the target processing node.

At 403: select a target processing algorithm of the target processing node according to the algorithm selection strategies.

At 404: proceed to a next image processing node associated with the target processing algorithm, return to perform the determining step of step 401 until the traversal of the algorithm decision tree ends.

At 405: proceed to a next image processing node associated with the image processing node, return to perform the determining step of step 401 until the traversal of the algorithm decision tree ends.

At 406: obtain the target processing node obtained at the end of the algorithm decision tree traversal.

Optionally, the algorithm decision tree may include a plurality of layers, each layer may include one or more nodes, and there may be a connection relationship between different layer nodes. A node may refer to an image processing node.

The top-down sequence may refer to determining sequentially, from the first layer of the algorithm decision tree, whether the traversed image processing node meets an algorithm execution condition from top to bottom. In practical applications, in the process of traversing the algorithm decision tree, not every image processing node is traversed, and the image processing node may be selected according to the algorithm selection strategy to realize the overall decision of the algorithm decision tree.

The algorithm decision tree may form a tree structure for the at least one image processing node according to the connection relationship corresponding to the algorithm selection strategies between the image processing nodes.

**In** this embodiment, when the selection of the target processing node is performed, whether a target parsing result of an image processing node meets the algorithm execution condition may be determined from the first image processing node in the algorithm decision tree according to the top-down sequence, and the target processing algorithm meeting the algorithm execution condition may be obtained by determining the algorithm execution condition, so as to efficiently and accurately select the target processing algorithm. On the basis of determining the algorithm execution condition, the algorithm decision tree can be successfully performed until the algorithm decision tree traversal ends. Through sequential condition determination of each image processing node in the algorithm decision tree, accurate selection of the target processing node is realized.

**In** a possible implementation, the algorithm selection strategies include at least one numerical interval of the image processing nodes, each numerical interval is associated with an image processing algorithm or a next image processing node, and an image processing algorithm of each numerical interval is connected to the next image processing node. Determining, in the algorithm decision tree, the target processing node meeting the algorithm execution condition with the target parsing results of respective image processing nodes includes: determining at least one numerical interval corresponding to the algorithm selection strategies of respective image processing nodes; determining, from the at least one numerical interval corresponding to respective image processing nodes, a first numerical interval directly associated with a next image processing node; and traversing the algorithm decision tree, in accordance with a determination that a target parsing result of an image processing node is outside the first numerical interval of the image processing node , determining the image processing node as the target processing node meeting the algorithm execution condition, and obtaining the target processing node of the algorithm decision tree.

The image processing node may be associated with one or more image processing algorithms, and the image processing node may perform data classification according to different numerical intervals. The numerical interval may be set based on the processing function or requirement of the image processing node and may be divided according to the data type corresponding to the parsing result of the image processing node. For example, taking the brightness value as an example, the higher the brightness value, the better the image quality. Taking the noise value as an example, the higher the noise value, the worse the image quality. The numerical interval may be set based on actual processing requirements of the image processing node.

Optionally, the target parsing result of the image processing node belongs to the first numerical interval may include: if the numerical value of a target parsing result is greater than the lower bound of the first numerical interval and / or less than the upper boundary of the first numerical interval, it may be determined that the target parsing result belongs to the first numerical interval, otherwise, the target parsing result does not belong to the first numerical interval. The lower bound and the upper bound of the first numerical interval may refer to two real numbers forming the interval range, and the real number of the lower bound is less than the real number of the upper bound.

Optionally, if the numerical interval is not set in the algorithm selection strategy, the numerical interval of the algorithm selection strategy may be infinite to infinitesimal. If the algorithm selection strategy sets an image processing algorithm, the image processing algorithm is directly determined as the target processing algorithm of the image processing node. If the algorithm selection strategy does not set an image processing algorithm, the image processing node is skipped and is proceeded to the next image processing node.

**In** the embodiments of the present disclosure, different algorithm selection strategies can be set for different image processing nodes. The setting of different algorithm selection strategies can realize rapid selection of the algorithms of respective image processing nodes, the problem that the algorithm selection mode is fixed due to single algorithm selection strategy is avoided, and the algorithm selection efficiency and accuracy are improved. Meanwhile, the setting of the image processing node from multiple data stages can be realized through the setting of the numerical value interval, and the setting accuracy and precision of the image processing node are improved.

In a specific implementation process, selecting, according to the algorithm selection strategies, the target processing algorithm of the target processing node may include: determining, in the at least one numerical interval corresponding to the algorithm selection strategies, a second numerical interval other than the first numerical interval; determining, from the second numerical interval, a target numerical interval to which a target parsing result belongs based on the target parsing result of the target processing node; and determining an image processing algorithm associated with the target numerical interval as the target processing algorithm of the target processing node.

Optionally, the algorithm selection strategy may include at least one numerical interval, the numerical interval may be associated with an image processing algorithm or unassociated with an image processing algorithm, and the numerical interval of the unassociated image processing algorithm may be connected to the next image processing node. If the numerical interval where the target parsing result of the previous image processing node is located is not associated with the image processing algorithm, it may be determined that the image processing node does not meet the algorithm selection condition.

In this embodiment, the second numerical interval in the at least one numerical interval in the algorithm selection strategy may be determined. The second numerical interval may be the numerical interval of the associated image processing algorithm. Therefore, numerical values are matched with the second numerical interval and the target parsing result, the accurate target processing algorithm may be obtained, and the selection efficiency and accuracy of the target processing algorithm are improved.

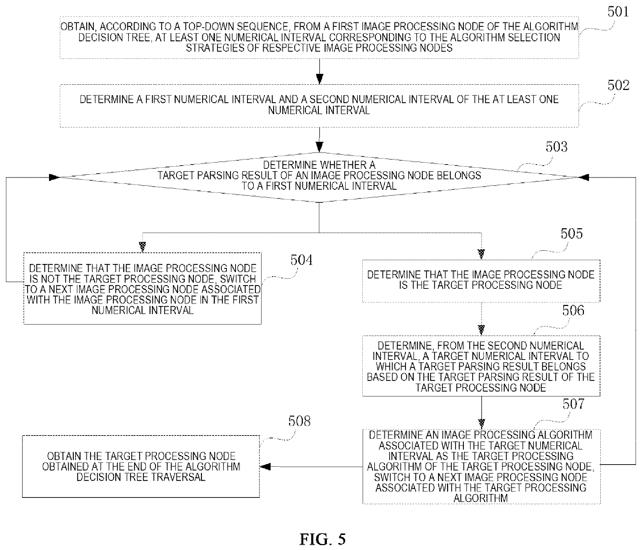

For ease of understanding, as shown in FIG. 5, it is a flowchart of another embodiment of a method for image processing provided in this embodiment. The difference from the foregoing embodiment is that: determining the target processing node and the target processing algorithm of the target processing node may include the following steps.

At 501: obtain, according to a top-down sequence, from a first image processing node of the algorithm decision tree, at least one numerical interval corresponding to the algorithm selection strategies of respective image processing nodes.

At 502: determine a first numerical interval and a second numerical interval of the at least one numerical interval. The first numerical interval is associated with the next image processing node, the second numerical interval is associated with the image processing algorithm, and the image processing algorithm is associated with the next image processing node. The next image processing algorithms associated with different numerical intervals may be the same or different and may be obtained based on an algorithm selection requirement setting.

At 503: determine whether a target parsing result of an image processing node belongs to the first numerical interval. If yes, perform 504, otherwise perform 505.

At 504: determine that the image processing node is not the target processing node, switch to a next image processing node associated with the image processing node in the first numerical interval, and return to perform 501.

At 505: determine that the image processing node is the target processing node.

At 506: determine, from the second numerical interval, a target numerical interval to which a target parsing result belongs based on the target parsing result of the target processing node.

At 507: determine an image processing algorithm associated with the target numerical interval as the target processing algorithm of the target processing node, switch to a next image processing node associated with the target processing algorithm, and return to perform 501.

At 508: obtain the target processing node obtained at the end of the algorithm decision tree traversal.

Of course, in practical applications, the at least one numerical interval may further include other numerical intervals such as a third numerical interval, and in this embodiment, the number of the at least one numerical interval is not specifically limited. The first numerical interval and the second numerical interval shown in this embodiment are for detailed description of the target parsing result, the first numerical interval and the second numerical interval in the present solution and should not be regarded as a detailed limitation of the technical solution of the present disclosure.

In this embodiment, if the target processing algorithm and the target processing node are selected from the algorithm decision tree, the tree structure of the algorithm decision tree may be used to divide the numerical interval of the image processing node from the first image processing node, to obtain the first numerical interval directly associated with the next image processing node and the second numerical interval not directly associated with the next image processing node. Through the joint application of the second numerical interval and the second numerical interval, the selection of the target processing node and the target processing algorithm associated with the target processing node may be quickly completed, and the selection efficiency and accuracy are improved.

In practical applications, in order to perform more detailed image processing on the image, the image processing node may be formed by several processing node groups. Generally, an image enhancement node, a content extraction node, and an image restoration node may be included.

By way of example, the image enhancement node may include at least one of: a resolution enhancement node, a noise reduction node, a brightness enhancement node, or a color correction node.

As an optional implementation, the image processing node includes an image enhancement node, and the image enhancement node specifically includes at least one of: a resolution enhancement node, a noise reduction node, a brightness enhancement node, or a color correction node. A target parsing result corresponding to the resolution enhancement node includes a resolution value. A target parsing result corresponding to the noise reduction node includes a definition and noise score. A target parsing result corresponding to the brightness enhancement node includes a brightness value. A target parsing result corresponding to the color correction node includes a color score.

Optionally, the image enhancement node may further include, in addition to at least one of a resolution enhancement node, a noise reduction node, a brightness enhancement node, or a color correction node, at least one node such as a portrait enhancement node, an image quality enhancement node, a portrait slimming node, a color enhancement node, and a noise reduction node. The image quality can be enhanced through the image enhancement node, and the processing effect of the subsequent image is improved.

In this embodiment, by setting the plurality of processing nodes of the image enhancement node, including at least one of the resolution enhancement nodes, the noise reduction node, the brightness enhancement node, or the color correction node, the image may be repaired from a plurality of dimensions such as a resolution, noise, brightness, color, and the like, and the angle and accuracy of the image enhancement are improved.

As still another optional implementation, the image processing node further includes: a content extraction node, and a target parsing result corresponding to the content extraction node includes a number of portraits.

Optionally, the content extraction node may further include, in addition to a content extraction node, at least one of: a portrait region extraction node, an object region segmentation node, and a saliency segmentation node.

Different extraction functions may be set by one or more content extraction nodes. Corresponding processing algorithms are implemented with different extraction functions.

In this embodiment, the image is processed with the content extraction node to obtain a corresponding processing node, and the number of portraits is analyzed by the processing node, so as to perform targeted analysis on the image with the number of portraits, thereby implementing detailed analysis of the image content.

As another optional implementation, the image processing node further includes: an image restoration node. The image restoration node includes at least one of: an image erasure algorithm, an image expansion algorithm, an image cropping algorithm, or a portrait slimming algorithm.

Optionally, the image expansion algorithm may include a product restoration algorithm, a cartoon restoration algorithm, a landscape restoration algorithm, and the like. The corresponding processing algorithm may be selected based on the image processing type, the type selection of the algorithm is implemented, the association degree between the algorithm and the image processing type is improved, and the algorithm processing efficiency is improved.

In this embodiment, for the image restoration node, any of the image erasure algorithm, the image expansion algorithm, the image cropping algorithm and the image thinning algorithm is selected, so that targeted restoration of the image is implemented, and the restoration efficiency and accuracy of the image are improved.

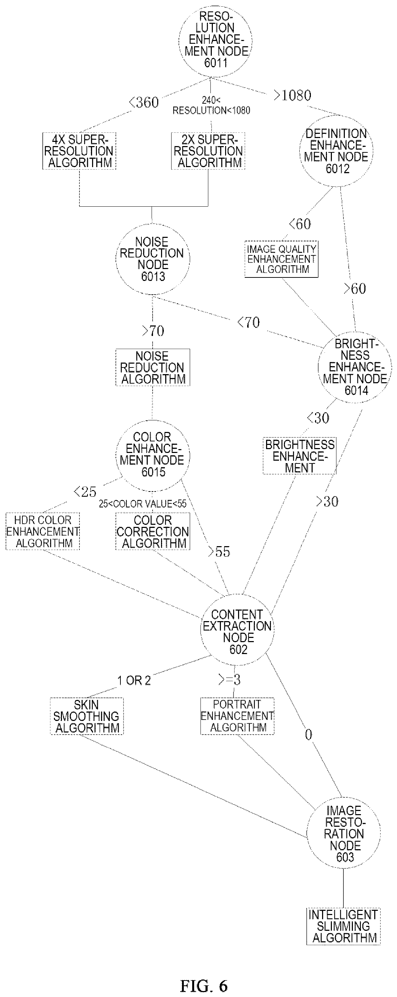

For ease of understanding, referring to FIG. 6, it is still another example diagram of an algorithm decision tree provided in an embodiment of the present disclosure. In the image processing method, image parsing models corresponding to at least one parsing dimension include: an image quality detection algorithm, a brightness detection algorithm, a color detection algorithm, a contrast detection algorithm, an aesthetic detection algorithm, a noise detection algorithm, a portrait recognition algorithm and the like. Through the above algorithms, the parsing results, such as a resolution, image quality definition, color degree, brightness, contrast, aesthetic score, noise score, the number of portraits, and the like, of the image to be processed can be detected. The foregoing parsing results may be used for selection of the target processing algorithm.

The algorithm decision tree may include an image enhancement node 601, a content extraction node 602, and an image restoration node 603.

By way of example, the image enhancement node 601 may include a resolution enhancement node 6011, a definition enhancement node 6012, a noise reduction node 6013, a brightness enhancement node 6014, and a color enhancement node 6015.

Further, a first processing node in the image adding node 601 may be the resolution enhancement node 6011. The resolution enhancement node 6011 may include three numerical intervals of resolution, (0, 360p) (360p, 1080p), and greater than 1080p, respectively. The numerical intervals (0, 360p) and (360p, 1080p) belong to a second numerical interval. The numerical interval (0, 360p) is associated with a 4 × super-resolution algorithm, and the numerical interval (360p, 1080p) is associated with a 2 × super-resolution algorithm. The numerical interval greater than 1080P is the first numerical interval and connects the image quality definition enhancing node 6012 without association with the image processing algorithm. After the resolution of the image to be processed is increased by the resolution enhancement algorithm, the noise reduction node 6013 may be proceeded to.

The noise reduction node 6013 may include two noise intervals, which are a numerical interval with the noise value greater than 70 and a numerical interval with the noise value less than 70. A noise reduction algorithm is associated with the second numerical interval with the noise greater than 70, and the first numerical interval with the noise less than 70 is directly connected to the brightness enhancement node 6014.

The definition enhancement node 6012 may include a numerical interval greater than 60 and a numerical interval less than 60. If the second numerical interval with the noise score greater than 60 is directly connected to the brightness enhancement node 6014, if the numerical interval with the noise score less than 60 is determined as the first numerical interval, the image quality of the image to be processed is enhanced based on the image quality enhancement algorithm associated with the numerical interval less than 60.

The brightness enhancement node 6014 may include two numerical intervals, a first numerical interval greater than 30 and a second numerical interval less than 30, respectively. The second interval less than 30 is associated with a brightness enhancement algorithm, and the first interval less than 30 is directly connected to the content extraction node 602.

The noise reduction algorithm associated with the second numerical interval of the noise reduction node 6013 may be connected to the color enhancement node 6015. The color enhancement node 6015 may include 3 numerical intervals, which are respectively numerical intervals with a color value less than 25, greater than 25, and less than 55 and greater than 55. The numerical interval with the color value less than 25 and associated with an HDR color enhancement algorithm, is the second numerical interval. The numerical interval with the color value greater than 25 and less than 55 and associated with a color correction algorithm is the second numerical interval. The numerical interval with the color value greater than 55 and directly connected to the content extraction node 502 is the first numerical interval thereof.

The parsing result corresponding to the content extraction node 602 may be the number of portraits, and the content extraction node 602 may include 3 numerical intervals, which are respectively greater than 1 and less than or equal to 2, greater than 3, and equal to 0. The numerical interval greater than 1 and less than or equal to 2 and associated with a skin smoothing algorithm is the second numerical interval. The numerical interval greater than 3 and associated with a portrait enhancement algorithm is the second numerical interval. The numerical interval equal to 0 and directly proceeding to the image restoration node 503 is the first numerical interval. The image may be connected to the image restoration node 603 through the skin smoothing algorithm or the portrait enhancement algorithm. The image restoration node 603 may be associated with an intelligent slimming algorithm according to the portrait beauty type.

Referring to the algorithm decision tree shown in FIG. 6, it is assumed that the resolution of any image to be processed is 256, the degree of color is 30, the brightness is 20, the contrast is 30, the aesthetic score is 50, the noise score is 50, and the number of portraits is 2. The resolution enhancement node 6011 determines that its resolution 256 belongs to the second numerical interval (0, 360p), the target processing algorithm corresponding to the resolution enhancement node 6011 is a 4 × super-resolution algorithm. Then, the noise reduction node 6013 connected to the 4 × super-resolution algorithm is proceeded to, the noise score 50 belongs to the first numerical interval less than 70, and no noise reduction is required. Thereafter, the brightness enhancement node 6014 is proceeded to. The brightness value is 20, it belongs to a second numerical interval less than 30 instead of the first numerical interval. The brightness enhancement node is the target processing node and may be applicable to a brightness enhancement algorithm associated with the numerical interval less than 30. Then, the content extraction node 602 connected to the brightness enhancement algorithm is proceeded to, and the number of portraits is 2. It may be determined that the content extraction node is the target processing node, and the corresponding target processing algorithm is the skin smoothing algorithm. Then, the image restoration node 603 may be proceeded to, which is directly associated with a slimming algorithm. It may be determined that the image restoration node is the target processing node, and the corresponding target processing algorithm is the slimming algorithm.

Therefore, the resolution enhancement node 6011, the brightness enhancement node 6014, the content extraction node 602, and the image restoration node 603 may be determined as the target processing nodes, and the target processing algorithm associated with each target processing algorithm may be obtained.

In practical applications, in order to implement successful processing of the image, the processing may be performed according to the position sequence of each image processing node in the algorithm decision tree. In an embodiment, the target processing node includes at least one target processing node, and the method further includes: determining, based on a position of the at least one target processing node in the algorithm decision tree, processing sequences corresponding to respective target processing nodes of the at least one target processing node. Performing, based on the target processing algorithm, the corresponding image processing on the image to be processed, to obtain the image processing result includes: performing, according to the processing sequences corresponding to respective target processing nodes of the at least one target processing node, respective target processing algorithms of respective target processing nodes sequentially, to obtain node processing results of respective target processing nodes, a node processing result output by a previous target processing node being served as an input of a next target processing node; and obtaining a node processing result corresponding to a last target processing node as the image processing result.

Optionally, the position of the target processing node in the algorithm decision tree may refer to a number of layers of the node in the algorithm decision tree and an order of the same layer.

In this embodiment, the target processing algorithm of each target processing node is respectively performed by determining respective processing sequences corresponding to the at least one target processing node, so that at least one target processing node is sequentially performed in sequence, successful execution of the target processing algorithm of each target processing node is achieved, execution efficiency and execution reliability of the at least one target processing node are effectively improved, and image processing efficiency is improved.

In order to accurately select the target parsing result of each image processing node, selecting the target parsing result from the at least one parsing result for each image processing node to obtain the target parsing result corresponding to each image processing node includes: based on processing requirement information of respective image processing nodes and parsing content information corresponding to respective parsing results of the at least one parsing result; and determining, based on the parsing content information corresponding to respective parsing results of the at least one parsing result, a parsing result corresponding to parsing content information with a highest similarity to the processing requirement information of respective image processing nodes as the target parsing results for respective image processing nodes.

Optionally, the processing requirement information of the image processing node may be respectively matched with the parsing content information of the at least one parsing result, to obtain matching degrees corresponding to the at least one parsing result of the image processing nodes, so as to use the parsing result with the highest matching degree as the target parsing result of the image processing node.

The information matching between the processing requirement information and the parsing content information may include performing word segmentation matching on the processing requirement information and the parsing content information, to obtain the similarity of the processing requirement information and the parsing content information. That is, the similarity may refer to a number of or a proportion of words with the same or similar meaning.

In this embodiment, when selecting the parsing content information for the image processing node, information matching may be respectively performed based on the parsing content information corresponding to the at least one parsed result and the processing requirement information of the image processing nodes. Through the matching of the information, the adaptation of each image processing node and different parsing dimensions can be realized, the accurate acquisition of the target parsing result of each image processing node is realized, and the algorithm selection accuracy of each processing node is improved.

In another embodiment, after selecting, based on the at least one parsing result, the target processing algorithm for the image to be processed, the method further includes: scheduling the target processing algorithm from an image processing algorithm library into an algorithm container. Performing the corresponding image improvement processing on the image to be processed based on the target processing algorithm to obtain the improved target image includes: performing, in the algorithm container, the corresponding image improvement processing on the image to be processed to obtain the improved target image based on the target processing algorithm.

Optionally, the algorithm container may refer to an independent algorithm running space established for the image to be processed. Independent operation of the algorithm may be implemented in the algorithm container. The algorithm container may be a Compute Unified Device Architecture (CUDA) context created for the image to be processed.

Scheduling the target processing algorithm from an image processing algorithm library into an algorithm container may include: scheduling, by an algorithm scheduler, the target processing algorithm from the image processing algorithm library into the algorithm container.

The image processing algorithm library may store an image processing algorithm obtained by training. Scheduling the target processing algorithm into the algorithm container may refer to scheduling parameters of the target processing algorithm from the image processing algorithm library into the algorithm container, so as to implement independent operation of the algorithm container on the target processing algorithm, so that the image processing process of the image to be processed is independent of other algorithm containers, and the running efficiency and safety of the algorithm are improved.

In this embodiment, after the target processing algorithm is determined, the target processing algorithm may be scheduled into the algorithm container, and the target processing algorithm is performed through the algorithm container, so that the execution process of the target processing algorithm is independent of other containers, and the execution efficiency and security of the algorithm are improved.

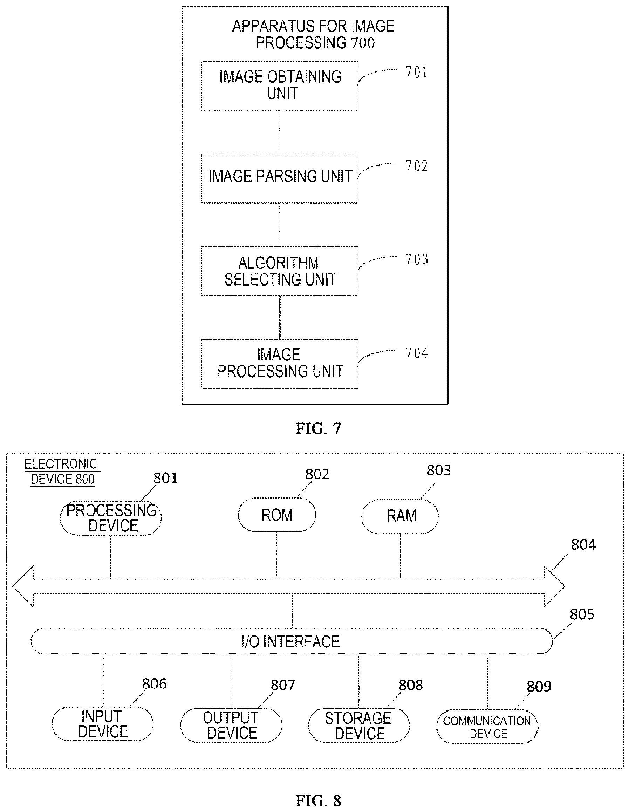

FIG. 7 is a schematic structural diagram of an apparatus for image processing provided in an embodiment of the present disclosure. The apparatus for image processing may include the following units.

An image obtaining unit 701 is configured to obtain an image to be processed to be processed in response to an image processing request.

An image parsing unit 702 is configured to parse the image to be processed from at least one parsing dimension, to obtain at least one parsing result of the image to be processed.

An algorithm selecting unit 703 is configured to select, based on the at least one parsing result, a target processing algorithm for the image to be processed.

An image processing unit 704 is configured to perform, based on the target processing algorithm, corresponding image processing on the image to be processed, to obtain an image processing result.

In an embodiment, the image parsing unit includes: a model obtaining module, configured to obtain image parsing models matching respective parsing dimensions; and an image parsing module, configured to input the image to be processed respectively into the image parsing models of respective parsing dimensions for parsing, and acquire parsing results of the image to be processed at respective parsing dimensions of the at least one parsing dimension, to obtain the at least one parsing result of the image to be processed.

In another embodiment, the algorithm selecting unit includes: a first determining module, configured to determine at least one image processing node in an algorithm decision tree, the algorithm decision tree being connected by the at least one image processing node according to algorithm selection strategies of respective nodes; a result selecting module, configured to select, from the at least one parsing result, target parsing results for respective image processing nodes, to obtain the target parsing results corresponding to respective image processing nodes; a result obtaining module, configured to determine, in the algorithm decision tree, a target processing node meeting an algorithm execution condition with the target parsing results of respective image processing nodes; and an algorithm selecting module, configured to select, according to the algorithm selection strategies, a target processing algorithm of the target processing node, to obtain the target processing algorithm of the image to be processed.

In some embodiments, the result obtaining module includes: a condition determining sub-module, configured to determine, according to a top-down sequence, from a first image processing node of the algorithm decision tree, whether a target parsing result of an image processing node meets the algorithm execution condition; a first processing sub-module, configured to, if it is determined that the target parsing result of the image processing node meets the algorithm execution condition, determining the image processing node as the target processing node, and after selecting a target processing algorithm of the target processing node according to the algorithm selection strategies, proceeding to a next image processing node associated with the target processing algorithm to continue to determine whether a target parsing result of the image processing node meets the algorithm execution condition; and a second processing sub-module, configured to, if it is determined that the target parsing result of the image processing node fails to meet the algorithm execution condition, proceeding to a next image processing node associated with the image processing node to continue to determine whether a target parsing result of the image processing node meets the algorithm execution condition; and a target obtaining sub-module, configured to obtain the target processing node obtained at the end of the algorithm decision tree traversal.

In an embodiment, the algorithm selection strategies include at least one numerical interval of the image processing nodes, a numerical interval is associated with an image processing algorithm or a next image processing node, and an image processing algorithm of a numerical interval is associated with a next image processing node. A result obtaining module, including: a first determining sub-module, configured to determine at least one numerical interval corresponding to the algorithm selection strategies of respective image processing nodes; an interval obtaining sub-module, configured to determine, from the at least one numerical interval corresponding to respective image processing nodes, a first numerical interval directly associated with a next image processing node; and a node traversing sub-module, configured to traverse the algorithm decision tree, in accordance with a determination that a target parsing result of an image processing node is outside the first numerical interval of the image processing node, determining the image processing node as the target processing node meeting the algorithm execution condition, and obtaining the target processing node of the algorithm decision tree.

In an embodiment, the algorithm selecting module includes: a second determining sub-module, configured to determine, in the at least one numerical interval corresponding to the algorithm selection strategies, a second numerical interval other than the first numerical interval; a third determining sub-module, configured to determine, from the second numerical interval, a target numerical interval to which a target parsing result belongs based on the target parsing result of the target processing node; and an algorithm association sub-module, configured to determine an image processing algorithm associated with the target numerical interval as the target processing algorithm of the target processing node.

As an optional implementation, the image processing node includes an image enhancement node, the image enhancement node include at least one of: a resolution enhancement node, a noise reduction node, a brightness enhancement node, or a color correction node; a target parsing result corresponding to the resolution enhancement node includes a resolution value; a target parsing result corresponding to the noise reduction node includes a definition and noise score; a target parsing result corresponding to the brightness enhancement node includes a brightness value; a target parsing result corresponding to the color correction node includes a color score.

As still another optional implementation, the image processing node further includes a content extraction node; a target parsing result corresponding to the content extraction node includes a number of portraits.

As still another optional implementation, the image processing node further includes an image restoration node; the image restoration node includes at least one of: an image erasure algorithm, an image expansion algorithm, an image cropping algorithm, or a portrait slimming algorithm.

In an embodiment, the target processing node includes at least one target processing node, and the method further includes: a sequence determining unit, configured to determine, based on a position of the at least one target processing node in the algorithm decision tree, processing sequences corresponding to respective target processing nodes of the at least one target processing node; and the image processing unit, including: an sequence performing module, configured to perform, according to the processing sequences corresponding to respective target processing nodes of the at least one target processing node, respective target processing algorithms of respective target processing nodes sequentially, to obtain node processing results of respective target processing nodes, a node processing result output by a previous target processing node being served as an input of a next target processing node; and a result obtaining module, configured to obtain a node processing result corresponding to a last target processing node as the image processing result.

In some embodiments, the result selecting module includes: a content obtaining sub-module, configured to based on processing requirement information of respective image processing nodes and parsing content information corresponding to respective parsing results of the at least one parsing result; and an information matching sub-module, configured to determine, based on the parsing content information corresponding to respective parsing results of the at least one parsing result, a parsing result corresponding to parsing content information with a highest similarity to the processing requirement information of respective image processing nodes as the target parsing results for respective image processing nodes.

In an embodiment, the method further includes: an algorithm scheduler unit, configured to schedule the target processing algorithm from an image processing algorithm library into an algorithm container; the image processing unit includes: a container performing module, configured to perform, in the algorithm container, the corresponding image improvement processing on the image to be processed to obtain the improved target image based on the target processing algorithm.

The apparatus provided in this embodiment may be configured to perform the technical solutions in the foregoing method embodiments, and implementation principles and technical effects thereof are similar, and details are not described herein again in this embodiment.

In order to implement the foregoing embodiments, an embodiment of the present disclosure further provides an electronic device.

Referring to FIG. 8, which shows a schematic structural diagram of an electronic device 800 suitable for implementing the embodiments of the present disclosure, and the electronic device 800 may be a terminal device or a server. The terminal device may include but are not limited to mobile terminals such as mobile phones, laptops, digital broadcast receivers, personal digital assistants (PDA), portable Android devices (PAD), portable media players (PMP), car-mounted terminals (such as vehicle navigation terminals), and fixed terminals such as digital TV, desktop computers, etc. The electronic device shown in FIG. 11 is only an example and should not bring any limitation on the function and scope of use of the embodiments of the present disclosure.

As shown in FIG. 8, the electronic device 800 may include a processing device (such as a central processing unit, graphics processing unit, etc.) 801. The electronic device 800 may perform various actions and processes based on programs stored in a read only memory (ROM) 802 or loaded from storage device 808 into a random access memory (RAM) 803. In the RAM 803, various programs and data necessary for the operation of the electronic device 800 are also stored. The processing device 801, ROM 802, and RAM 803 are connected to each other through a bus 804. An input/output (I/O) interface 805 is also connected to the bus 804.

Generally, the following devices can be connected to the I/O interface 805: an input device 806 including, for example, touch screens, touchpads, keyboards, mice, cameras, microphones, accelerometers, gyroscopes, etc.; an output device 807 including liquid crystal displays (LCDs), speakers, vibrators, etc.; a storage device 808 including magnetic tapes, hard disks, etc.; and a communication device 809. The communication device 809 may allow the electronic device 800 to communicate with other devices wirelessly or wired to exchange data. Although FIG. 8 illustrates the electronic device 800 with various devices, it should be understood that it is not required to implement or have all the devices shown. It can be implemented or equipped with more or fewer devices as an alternative.

In particular, according to the embodiments of the present disclosure, the process described above with reference to the flowchart can be implemented as a computer software program. For example, an embodiment of the present disclosure includes a computer program product, and the computer program product includes a computer program carried on a computer-readable medium, where the computer program includes program code for performing a method for recommending words. In such an embodiment, the computer program can be downloaded and installed from a network through the communication device 809, or installed through the storage device 808, or installed through the ROM 802. When the computer program is executed by the processing device 801, the above functions defined in the method of the embodiment of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. The computer-readable storage media may include but are not limited to: an electrical connection with one or more wires, a portable computer disk, a hard disk, random access memory (RAM), read-only memory (ROM), an erasable programmable read only memory (EPROM or flash memory), an optical fiber, a portable compact disk read only memory (CD-ROM), an optical storage device, a magnetic storage device, or any combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as a carrier wave, the computer-readable signal medium carries computer-readable program code therein. Such propagated data signals may take many forms, including but not limited to electromagnetic signals, optical signals, or any combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, the medium includes but not limited to: wires, optical cables, RF (radio frequency), etc., or any combination thereof.

The computer readable medium may be included in the electronic device or may exist separately without being assembled into the electronic device.

The computer readable medium carries one or more programs. When the one or more programs are executed by an electronic device, the electronic device executes the method shown in the above embodiments.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including LAN or WAN - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product of various embodiments of the present disclosure. Each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Nodes described in the embodiments of the present disclosure may be implemented by means of software or hardware. In some cases, the name of the node does not constitute a limitation on the module itself. For example, a first acquisition node may further be described as "a node for acquiring at least two Internet Protocol addresses".

The functions described herein above can be performed at least in part by one or more hardware logic components. For example, without limitation, example types of hardware logic components that may be used include: a field programmable gate array (FPGA), an application specific integrated circuits (ASIC), an application specific standard part (ASSP), a system on chip (SOC), a complex programmable logic device (CPLD), and so on.

**In** the context of present disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, RAM, ROM, EPROM or flash memory, optical fibers, CD-ROM, optical storage devices, magnetic storage devices, or any combination thereof.

In a first aspect, a method of page display is provided according to one or more embodiments of the present disclosure, including: in response to an image processing request, obtaining an image to be processed; parsing the image to be processed from at least one parsing dimension, to obtain at least one parsing result of the image to be processed; selecting, based on the at least one parsing result, a target processing algorithm for the image to be processed; and performing, based on the target processing algorithm, corresponding image improvement processing on the image to be processed, to obtain an improved target image.

According to one or more embodiments of the present disclosure, parsing the image to be processed from the at least one parsing dimension, to obtain the at least one parsing result of the image to be processed includes: obtaining image parsing models matching respective parsing dimensions; and inputting the image to be processed respectively into the image parsing models of respective parsing dimensions for parsing, acquiring parsing results of the image to be processed at respective parsing dimensions of the at least one parsing dimension, to obtain the at least one parsing result of the image to be processed.

According to one or more embodiments of the present disclosure, selecting, based on the at least one parsing result, the target processing algorithm for the image to be processed includes: determining at least one image processing node in an algorithm decision tree, the algorithm decision tree being connected by the at least one image processing node according to algorithm selection strategies of respective nodes; selecting, from the at least one parsing result, target parsing results for respective image processing nodes, to obtain the target parsing results corresponding to respective image processing nodes; determining, in the algorithm decision tree, a target processing node meeting an algorithm execution condition with the target parsing results of respective image processing nodes; and selecting, according to the algorithm selection strategies, a target processing algorithm of the target processing node, to obtain the target processing algorithm of the image to be processed.

According to one or more embodiments of the present disclosure, determining, in the algorithm decision tree, the target processing node meeting the algorithm execution condition with the target parsing results of respective image processing nodes includes: determining, according to a top-down sequence, from a first image processing node of the algorithm decision tree, whether a target parsing result of an image processing node meets the algorithm execution condition; if it is determined that the target parsing result of the image processing node meets the algorithm execution condition, determining the image processing node as the target processing node, and after selecting a target processing algorithm of the target processing node according to the algorithm selection strategies, proceeding to a next image processing node associated with the target processing algorithm to continue to determine whether a target parsing result of the image processing node meets the algorithm execution condition; if it is determined that the target parsing result of the image processing node fails to meet the algorithm execution condition, proceeding to a next image processing node associated with the image processing node to continue to determine whether a target parsing result of the image processing node meets the algorithm execution condition; and obtaining the target processing node obtained at the end of the algorithm decision tree traversal.

According to one or more embodiments of the present disclosure, the algorithm selection strategies include at least one numerical interval of the image processing nodes, a numerical interval is associated with an image processing algorithm or a next image processing node, and an image processing algorithm of a numerical interval is associated with a next image processing node; determining, in the algorithm decision tree, the target processing node meeting the algorithm execution condition with the target parsing results of respective image processing nodes includes: determining at least one numerical interval corresponding to the algorithm selection strategies of respective image processing nodes; determining, from the at least one numerical interval corresponding to respective image processing nodes, a first numerical interval directly associated with a next image processing node; and traversing the algorithm decision tree, in accordance with a determination that a target parsing result of an image processing node is outside the first numerical interval of the image processing node, determining the image processing node as the target processing node meeting the algorithm execution condition, and obtaining the target processing node of the algorithm decision tree.

According to one or more embodiments of the present disclosure, selecting, according to the algorithm selection strategies, the target processing algorithm of the target processing node includes: determining, in the at least one numerical interval corresponding to the algorithm selection strategies, a second numerical interval other than the first numerical interval; determining, from the second numerical interval, a target numerical interval to which a target parsing result belongs based on the target parsing result of the target processing node; and determining an image processing algorithm associated with the target numerical interval as the target processing algorithm of the target processing node.

According to one or more embodiments of the present disclosure, the image processing node includes an image enhancement node, the image enhancement node include at least one of: a resolution enhancement node, a noise reduction node, a brightness enhancement node, or a color correction node; a target parsing result corresponding to the resolution enhancement node includes a resolution value; a target parsing result corresponding to the noise reduction node includes a definition and noise score; a target parsing result corresponding to the brightness enhancement node includes a brightness value; a target parsing result corresponding to the color correction node includes a color score.

According to one or more embodiments of the present disclosure, the image processing node further includes a content extraction node; a target parsing result corresponding to the content extraction node includes a number of portraits.

According to one or more embodiments of the present disclosure, the image processing node further includes an image restoration node; the image restoration node includes at least one of: an image erasure algorithm, an image expansion algorithm, an image cropping algorithm, or a portrait slimming algorithm.

According to one or more embodiments of the present disclosure, the target processing node includes at least one target processing node, and the method further includes: determining, based on a position of the at least one target processing node in the algorithm decision tree, processing sequences corresponding to respective target processing nodes of the at least one target processing node; performing, based on the target processing algorithm, the corresponding image processing on the image to be processed, to obtain the image processing result includes: performing, according to the processing sequences corresponding to respective target processing nodes of the at least one target processing node, respective target processing algorithms of respective target processing nodes sequentially, to obtain node processing results of respective target processing nodes, a node processing result output by a previous target processing node being served as an input of a next target processing node; and obtaining a node processing result corresponding to a last target processing node as the image processing result.

According to one or more embodiments of the present disclosure, selecting, from the at least one parsing result, the target parsing results for respective image processing nodes includes: based on processing requirement information of respective image processing nodes and parsing content information corresponding to respective parsing results of the at least one parsing result; and determining, based on the parsing content information corresponding to respective parsing results of the at least one parsing result, a parsing result corresponding to parsing content information with a highest similarity to the processing requirement information of respective image processing nodes as the target parsing results for respective image processing nodes.

According to one or more embodiments of the present disclosure, after selecting, based on the at least one parsing result, the target processing algorithm for the image to be processed, the method further includes: scheduling the target processing algorithm from an image processing algorithm library into an algorithm container; performing, based on the target processing algorithm, the corresponding image improvement processing on the image to be processed to obtain the improved target image includes: performing, in the algorithm container, the corresponding image improvement processing on the image to be processed to obtain the improved target image based on the target processing algorithm.

In a second aspect, an apparatus for image processing is provided according to one or more embodiments of the present disclosure, including: an image obtaining unit configured to obtain an image to be processed to be processed in response to an image processing request; an image parsing unit configured to parse the image to be processed from at least one parsing dimension, to obtain at least one parsing result of the image to be processed; an algorithm selection unit configured to select, based on the at least one parsing result, a target processing algorithm for the image to be processed; an image processing unit configured to perform, based on the target processing algorithm, corresponding image processing on the image to be processed, to obtain an image processing result.

In a third aspect, an electronic device is provided according to one or more embodiments of the present disclosure, including: at least one processor and a memory. The memory stores computer executable instructions. The at least one processor executes the computer executable instructions stored in the memory, to enable the at least one processor to perform the method of image processing according to the first aspect and various possible designs of the first aspect.

In a fourth aspect, a computer readable storage medium is provided according to one or more embodiments of the present disclosure. The computer readable storage medium stores computer executable instructions that, when executed by a processor, implement the method of image processing according to the first aspect and various possible designs of the first aspect.

In a fifth aspect, a computer program product is provided according to one or more embodiments of the present disclosure, including a computer program which, when executed by a processor, implements the method of image processing according to the first aspect and various possible designs of the first aspect.

The above description is only for the preferred embodiments of the present disclosure and an explanation of the technical principles used. Those skilled in the art should understand that the scope involved in the present disclosure is not limited to technical solutions formed by specific combinations of the foregoing technical features and should also cover other technical solutions formed by any combinations of the foregoing technical features or their equivalent features without departing from the disclosed concept. For example, a technical solution is formed by replacing the above features with (but not limited to) technical features with similar functions disclosed in the present disclosure.

Furthermore, although operations are depicted in a specific order, this should not be understood as requiring that these operations be performed in the specific order shown or performed in a sequential order. In certain environments, multitasking and parallel processing may be advantageous. Likewise, although several specific implementation details are included in the above discussion, these should not be interpreted as limitations on the scope of present disclosure. Certain features described in the context of individual embodiments may also be combined to be implemented in a single embodiment. On the contrary, various features described in the context of a single embodiment may also be implemented separately or in any suitable sub combination in multiple embodiments.

Although the present subject matter has been described in language specific to structural features and/or methodological logical actions, it should be understood that the subject matter defined in the attached claims may not necessarily be limited to the specific features or acts described above. On the contrary, the specific features and actions described above are only example forms of implementing the claims.

## Claims

1. A method for image processing, comprising:
in response to an image processing request, obtaining an image to be processed;
parsing the image to be processed from at least one parsing dimension, to obtain at least one parsing result of the image to be processed;
selecting, based on the at least one parsing result, a target processing algorithm for the image to be processed; and
performing, based on the target processing algorithm, corresponding image improvement processing on the image to be processed, to obtain an improved target image.

2. The method of claim 1, wherein parsing the image to be processed from the at least one parsing dimension, to obtain the at least one parsing result of the image to be processed comprises:
obtaining image parsing models matching respective parsing dimensions; and
inputting the image to be processed respectively into the image parsing models of respective parsing dimensions for parsing, acquiring parsing results of the image to be processed at respective parsing dimensions of the at least one parsing dimension, to obtain the at least one parsing result of the image to be processed.

3. The method of claim 1 or 2, wherein selecting, based on the at least one parsing result, the target processing algorithm for the image to be processed comprises:
determining at least one image processing node in an algorithm decision tree, the algorithm decision tree being connected by the at least one image processing node according to algorithm selection strategies of respective nodes;
selecting, from the at least one parsing result, target parsing results for respective image processing nodes, to obtain the target parsing results corresponding to respective image processing nodes;
determining, in the algorithm decision tree, a target processing node meeting an algorithm execution condition with the target parsing results of respective image processing nodes; and
selecting, according to the algorithm selection strategies, a target processing algorithm of the target processing node, to obtain the target processing algorithm of the image to be processed.

4. The method of claim 3, wherein determining, in the algorithm decision tree, the target processing node meeting the algorithm execution condition with the target parsing results of respective image processing nodes comprises:
determining, according to a top-down sequence, from a first image processing node of the algorithm decision tree, whether a target parsing result of an image processing node meets the algorithm execution condition;
in accordance with a determination that the target parsing result of the image processing node meets the algorithm execution condition, determining the image processing node as the target processing node, and after selecting a target processing algorithm of the target processing node according to the algorithm selection strategies, proceeding to a next image processing node associated with the target processing algorithm to continue to determine whether a target parsing result of the image processing node meets the algorithm execution condition;
in accordance with a determination that the target parsing result of the image processing node fails to meet the algorithm execution condition, proceeding to a next image processing node associated with the image processing node to continue to determine whether a target parsing result of the image processing node meets the algorithm execution condition; and
obtaining the target processing node obtained at the end of the algorithm decision tree traversal.

5. The method of claim 3, wherein the algorithm selection strategies comprise at least one numerical interval of the image processing nodes, a numerical interval is associated with an image processing algorithm or a next image processing node, and an image processing algorithm of a numerical interval is associated with a next image processing node;
determining, in the algorithm decision tree, the target processing node meeting the algorithm execution condition with the target parsing results of respective image processing nodes comprises:
determining at least one numerical interval corresponding to the algorithm selection strategies of respective image processing nodes;
determining, from the at least one numerical interval corresponding to respective image processing nodes, a first numerical interval directly associated with a next image processing node; and
traversing the algorithm decision tree, in accordance with a determination that a target parsing result of an image processing node is outside the first numerical interval of the image processing node, determining the image processing node as the target processing node meeting the algorithm execution condition, and obtaining the target processing node of the algorithm decision tree.

6. The method of claim 5, wherein selecting, according to the algorithm selection strategies, the target processing algorithm of the target processing node comprises:
determining, in the at least one numerical interval corresponding to the algorithm selection strategies, a second numerical interval other than the first numerical interval;
determining, from the second numerical interval, a target numerical interval to which a target parsing result belongs based on the target parsing result of the target processing node; and
determining an image processing algorithm associated with the target numerical interval as the target processing algorithm of the target processing node.

7. The method of claim 3, wherein the image processing node comprises an image enhancement node, the image enhancement node comprise at least one of: a resolution enhancement node, a noise reduction node, a brightness enhancement node, or a color correction node;
a target parsing result corresponding to the resolution enhancement node comprises a resolution value;
a target parsing result corresponding to the noise reduction node comprises a definition and noise score;
a target parsing result corresponding to the brightness enhancement node comprises a brightness value;
a target parsing result corresponding to the color correction node comprises a color score.

8. The method of claim 3, wherein the image processing node further comprises a content extraction node;
a target parsing result corresponding to the content extraction node comprises a number of portraits.

9. The method of claim 3, wherein the image processing node further comprises an image restoration node;
the image restoration node comprises at least one of: an image erasure algorithm, an image expansion algorithm, an image cropping algorithm, or a portrait slimming algorithm.

10. The method of claim 3, wherein the target processing node comprises at least one target processing node, and the method further comprises:
determining, based on a position of the at least one target processing node in the algorithm decision tree, processing sequences corresponding to respective target processing nodes of the at least one target processing node;
performing, based on the target processing algorithm, the corresponding image processing on the image to be processed, to obtain the image processing result comprises:
performing, according to the processing sequences corresponding to respective target processing nodes of the at least one target processing node, respective target processing algorithms of respective target processing nodes sequentially, to obtain node processing results of respective target processing nodes, a node processing result output by a previous target processing node being served as an input of a next target processing node; and
obtaining a node processing result corresponding to a last target processing node as the image processing result.

11. The method of claim 3, wherein selecting, from the at least one parsing result, the target parsing results for respective image processing nodes comprises:
based on processing requirement information of respective image processing nodes and parsing content information corresponding to respective parsing results of the at least one parsing result; and
determining, based on the parsing content information corresponding to respective parsing results of the at least one parsing result, a parsing result corresponding to parsing content information with a highest similarity to the processing requirement information of respective image processing nodes as the target parsing results for respective image processing nodes.

12. The method of any of claims 1 to 11, wherein after selecting, based on the at least one parsing result, the target processing algorithm for the image to be processed , the method further comprises:
scheduling the target processing algorithm from an image processing algorithm library into an algorithm container;
performing, based on the target processing algorithm, the corresponding image improvement processing on the image to be processed, to obtain the improved target image comprises:
performing, in the algorithm container, the corresponding image improvement processing on the image to be processed to obtain the improved target image based on the target processing algorithm.

13. An apparatus for image processing, comprising:
an image obtaining unit configured to obtain an image to be processed to be processed in response to an image processing request;
an image parsing unit configured to parse the image to be processed from at least one parsing dimension, to obtain at least one parsing result of the image to be processed;
an algorithm selecting unit configured to select, based on the at least one parsing result, a target processing algorithm for the image to be processed; and
an image processing unit configured to perform, based on the target processing algorithm, corresponding image processing on the image to be processed, to obtain an image processing result.

14. An electronic device, comprising: a processor and a memory;
the memory storing computer executable instructions;
the processor executing the computer executable instructions stored in the memory, to enable the processor to be configured with the method for image processing according to any of claims 1 to 12.

15. A computer readable storage medium having stored computer executable instructions that, when executed by a processor, implement the method for image processing according to any of claims 1 to 12.

16. A computer program product, comprising a computer program that, when executed by a processor, is configured with the method for image processing according to any of claims 1 to 12.
